# EUROPEAN PATENT SPECIFICATION

(11) **EP 2 151 883 B1**
(45) Date of publication and mention of the grant of the patent: **22.06.2016**
(21) Application number: 08740414.1
(22) Date of filing: 15.04.2008
(51) Int. Cl.: H01M 14/00, C09D 11/02, H01L 31/04, C09D 7/12, H01G 9/20

(54) **PHOTOELECTRICAL CELL, AND COATING AGENT FOR FORMING POROUS SEMICONDUCTOR FILM FOR THE PHOTOELECTRICAL CELL**
FOTOELEKTRISCHE ZELLE UND BESCHICHTUNGSMITTEL ZUR BILDUNG EINES PORÖSEN HALBLEITERFILMS FÜR DIE FOTOELEKTRISCHE ZELLE
CELLULE PHOTOÉLECTRIQUE, ET AGENT DE REVÊTEMENT POUR FORMER UN FILM SEMI-CONDUCTEUR POREUX POUR LA CELLULE PHOTOÉLECTRIQUE

(30) Priority: 26.04.2007 JP 2007116735
(43) Date of publication of application: 10.02.2010
(73) Proprietor: JGC Catalysts and Chemicals Ltd., Kawasaki-shi, Kanagawa 212-0013 (JP)
(72) Inventor: MIZUNO, Takaki, Fukuoka 808-0027 (JP); KOYANAGI, Tsuguo, Fukuoka 808-0027 (JP); TANAKA, Atsushi, Fukuoka 808-0027 (JP)
(74) Representative: Matthews, Derek Peter
(86) International application number: PCT/JP2008/057328
(87) International publication number: WO 2008/136261

(56) References cited:
- EP-A1- 1 589 548
- EP-A1- 1 619 700
- EP-A2- 1 087 446
- JP-A- 2001 155 791
- JP-A- 2002 093 471
- JP-A- 2002 110 261
- JP-A- 2002 141 115
- JP-A- 2002 319 439
- JP-A- 2003 168 496
- JP-A- 2004 178 885
- JP-A- 2005 209 567
- JP-A- 2006 339 127

## Description

### TECHNICAL FIELD

The present invention relates to a process for producing a photovoltaic cell which has excellent electron production ability, is inhibited from recombination of electrons, is inhibited from backflow of electrons (referred to as "dark current" or "back current") and short circuit attributable to adhesion between electrodes and has high photoelectric conversion efficiency.

### BACKGROUND ART

Metal oxide semiconductor materials having high band gap have been used not only as photoelectric conversion materials and photocatalyst materials but also for photosensors, electricity-storing materials (batteries), etc.

Of these, the photoelectric conversion materials are materials from which light energy can be taken out as electric energy and are materials to convert light energy into electric energy taking advantage of electrochemical reaction between electrodes. When such a photoelectric conversion material is irradiated with light, an electron is generated on one electrode side and moves to a counter electrode. The electron having moved to the counter electrode then moves, as an ion, in an electrolyte and returns to the former electrode. This energy conversion is carried out continuously, and hence such a material is utilized for, for example, solar cells.

Ageneral solar cell is constructed by first forming a film of a semiconductor for a photoelectric conversion material on a support such as a glass plate, on which a transparent conductive film has been formed, to prepare an electrode, then preparing a different support such as a glass plate on which a transparent conductive film has been formed as a counter electrode, and enclosing an electrolyte between these electrodes.

When a photosensitizer adsorbed on the semiconductor film for a photoelectric conversion material is irradiated with, for example, sunlight, the photosensitizer absorbs light in the visible region and is excited. An electron generated by this excitation moves into the semiconductor, then moves to the transparent conductive glass electrode and moves to the counter electrode through a conductor wire that connect the two electrodes to each other. The electron having moved to the counter electrode reduces the oxidation-reduction system in the electrolyte. On the other hand, the photosensitizer that has caused the electron to move into the semiconductor becomes in a state of an oxidant, and this oxidant is reduced by the oxidation-reduction system in the electrolyte and returns to the original state. Thus, the electron continuously flows, and the photoelectric conversion material functions as a solar cell.

As the photoelectric conversion material, a material in which a surface of a semiconductor is allowed to adsorb a spectral sensitizing dye having absorption in the visible region is used. For example, a solar cell having a spectral sensitizing dye layer comprising a transition metal complex, such as a ruthenium complex, on a surface of a metal oxide semiconductor film is described in Japanese Patent Laid-Open Publication No. 220380/1989 (patent document 1). In National Publication of International Patent No. 504023/1993 (patent document 2), a solar cell having a spectral sensitizing dye layer comprising a transition metal complex, such as a ruthenium complex, on a surface of a metallic ion-doped titanium oxide semiconductor layer is described.

In such solar cells as above, it is important for enhancing photoelectric conversion efficiency that movement of electron from the spectral sensitizing dye layer such as ruthenium complex having been excited by absorption of light to the titanium oxide semiconductor layer is carried out rapidly, and if movement of electron is not carried out rapidly, recombination of ruthenium complex with electron occurs again or backflow of electron (referred to as "dark current" or "back current") occurs, resulting in a problem of lowering of photoelectric conversion efficiency.

On this account, it has been studied to increase adsorption quantity of the spectral sensitizing dye on the titanium oxide semiconductor film surface or to improve-electron transfer in the titanium oxide semiconductor film.

For example, it has been proposed that in the formation of a titanium oxide semiconductor film, steps of applying a titania sol onto an electrode substrate, drying it and then calcining it are carried out repeatedly to form a porous thick film, that is, the semiconductor film is made porous, whereby the quantity of Ru complex supported on the surface is increased. Further, it has been also proposed to carry out calcining of titania fine particles at a temperature of not lower than 400 °C to enhance electrical conduction property. Moreover, in National Publication of International Patent No. 511113/1994 (patent document 3), it has been proposed that in order to increase the effective surface, a titania film is electrochemically deposited by immersing the electrode substrate in an aqueous solution of titanium chloride or by using a hydrolytic solution of titanium chloride.

In Japanese Patent Laid-Open Publication No. 49311/2006 (patent document 4),it is disclosed that when a light-reactive layer (semiconductor layer) in which at least some of macro-particles having a mean particle diameter of not less than 100 nm and nano-particles having a mean particle diameter of not more than 50 nm are chemically bonded to one another is used, an effect of enhancing scattering of light and/or an effect of reducing electrical impedance is exerted, and therefore, a relatively high efficiency, a relatively high voltage (open circuit), a relatively high Jcs and/or a relatively high film factor is given.

Japanese Patent Laid-Open Publication No. 319439/2002 (patent document 5) discloses a photoelectric cell comprising a substrate with an electrode (A), having a first electrode layer on its surface, on which a porous semiconductor film, adsorbing a photosensitizer therein, is formed, and a substrate with an electrode (B), having an second electrode layer on its surface, arranged so that the electrode layers face each other, and an electrolyte layer formed between the porous semiconductor film and the second electrode layer, and a non-porous semiconductor film formed between the first electrode layer and the porous semiconductor film. The porous semiconductor film comprises simple particles of titanium oxide.

Japanese Patent Laid-Open Publication No. 155791/2001 (patent document 6) discloses an alternative photoelectric cell in which the semiconductor film comprises metallic oxide particles of core-shell structure, wherein an inherent volume resistance (Ec) of the metallic oxide constituting the core particle and an inherent volume resistance (Es) of metallic oxide constituting the shell have a relation of Ec < Es. Thus the metallic oxide constituting the core particle differs from the metallic oxide constituting the shell.

JP2002110261 discloses a cell similar to the one disclosed in patent document 6, in which however the refractive index and the bandgap of the core particles are different from the ones of the shell particles.

### DISCLOSURE OF THE INVENTION

### PROBLEM TO BE SOLVED BY THE INVENTION

However, the conventional solar cell using a semiconductor film comprising finely divided particles, such as a titania sol, or a semiconductor film comprising macro-particles and nano-particles is still insufficient in the photoelectric conversion efficiency, and further improvement is desired.

In the light of the above problems, the present inventors have earnestly studied. As a result, they have found that when titanium oxide particles which comprise base particles made of anatase titanium oxide and anatase titanium oxide fine particle layers covering the surfaces of the base particles are used in a porous metal oxide semiconductor film, the photoelectric conversion efficiency of the resulting photovoltaic cell is enhanced, and they have accomplished the present invention.

Moreover, the present inventors have found that when a titanium oxide thin film is formed between a transparent electrode layer and a porous semiconductor film by the use of peroxytitanic acid (also known as peroxotitanic acid), a photovoltaic cell further enhanced in the photoelectric conversion efficiency is obtained.

### MEANS TO SOLVE THE PROBLEM

The invention provides the use of peroxotitanic acid in the manufacture of a photovoltaic cell comprising:
a first substrate having a first electrode layer on its surface and having a porous metal oxide semiconductor film which has adsorbed a photosensitizer and is formed on the surface of the first electrode layer,
a second substrate having a second electrode layer on its surface,
said first substrate and said second substrate being arranged in such a manner that the first electrode layer and the second electrode layer face each other, and
an electrolyte layer which is provided between the porous metal oxide semiconductor film and the second electrode layer,
wherein the porous metal oxide semiconductor film comprises titanium oxide particles which comprise 60 wt% base particles made of anatase titanium oxide and 40 wt% anatase titanium oxide fine particle layers covering the surfaces of the base particles,
the titanium oxide fine particles have a mean particle diameter of 20 nm, the base particles are made of spherical titanium oxide, the base particles have a mean particle diameter of 400 nm, and the titanium oxide particles have a mean particle diameter of 450 nm,
and wherein a titanium oxide thin film derived from peroxotitanic acid, having a film thickness of 40 nm, a pore volume of 0.12 ml/g and a mean pore diameter of 2 nm, is provided between the first electrode layer and the porous metal oxide semiconductor film.

### EFFECT OF THE INVENTION

According to the present invention, there can be provided a photovoltaic cell which has high adsorption quantity of a photosensitizer because the porous metal oxide semiconductor film comprises titanium oxide particles which comprise base particles made of titanium oxide and titanium oxide fine particles covering the surfaces of the base particles, which is improved in utilization of light because light scattering effect is obtained, and which can be inhibited from backflow of electrons and recombination of electrons and thereby enhanced in the photoelectric conversion efficiency because the electrical conduction path is shortened.

### BRIEF DESCRIPTION OF THE DRAWING

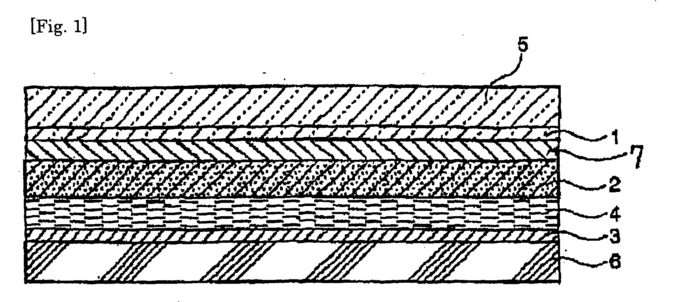

Fig. 1 is a schematic sectional view showing an example of a photovoltaic cell manufactured according to the present invention.

### Description of symbols

1: first electrode layer
2: semiconductor film
3: second electrode layer
4: electrolyte layer
5: first substrate
6: second substrate
7: titanium oxide thin film

### BEST MODE FOR CARRYING OUT THE INVENTION

First, the photovoltaic cell manufactured according to the invention is described in detail hereinafter.

### Photovoltaic cell

The photovoltaic cell manufactured according to the invention is a photovoltaic cell comprising:
a first substrate having a first electrode layer on its surface and having a porous metal oxide semiconductor film which has adsorbed a photosensitizer and is formed on the surface of the first electrode layer,
a second substrate having a second electrode layer on its surface,
said first substrate and said second substrate being arranged in such a manner that the first electrode layer and the second electrode layer face each other, and
an electrolyte layer which is provided between the porous metal oxide semiconductor film and the second electrode layer,
wherein the porous metal oxide semiconductor film comprises titanium oxide particles which comprise base particles made of titanium oxide and titanium oxide fine particle layers covering the surfaces of the base particles.

The photovoltaic cell manufactured according to the invention is, for example, a photovoltaic cell shown in Fig. 1.

The photovoltaic cell of fig. 1 has a titanium oxide thin film on the first electrode layer. When the photovoltaic cell has such a titanium oxide thin film, inhibition of dark current and inhibition of recombination of electrons by the Titanium oxide thin film are high, and the photoelectric conversion efficiency can be enhanced.

In Fig. 1, numeral 1 designates a first electrode layer, numeral 2 designates a semiconductor film, numeral 3 designates a second electrode layer, numeral 4 designates an electrolyte layer, numeral 5 designates a first substrate, numeral 6 designates a second substrate, and numeral 7 designates a titanium oxide thin film.

The photovoltaic cell of the invention is not limited to the photovoltaic cell shown in the figure, and may be a photovoltaic cell having a different electrode layer and a different electrolyte layer which are provided between the semiconductor films.

### Substrate

As one of the substrates, a substrate having transparency and insulation property, such as a glass substrate or an organic polymer substrate (e.g., PET substrate), is employable.

The other substrate is not specifically restricted provided that it has such a strength that it is fit for use, and as this substrate, not only an insulating substrate, such as a glass substrate or an organic polymer substrate (e.g., PET substrate), but also a conductive substrate, such as a substrate of metallic titanium, metallic aluminum, metallic copper or metallic nickel, is employable.

At least one of the substrates has only to be transparent.

### Electrode layer

As the first electrode layer formed on the surface of the first substrate, a hitherto publicly known electrode, such as tin oxide, tin oxide doped with Sb, F or P, indium oxide doped with Sn and/or F, antimony oxide, zinc oxide or noble metal, is employable.

Such an electrode layer can be formed by a hitherto publicly known method, such as thermal decomposition method or CVD method.

The second electrode layer formed on the surface of the other substrate is not specifically restricted provided that it has a reduction catalytic ability, and there can be used hitherto publicly known electrodes, e.g., electrodes made of electrode materials, such as platinum, rhodium, ruthenium metal and ruthenium oxide, electrodes obtained by plating or depositing the electrode materials on the surfaces of conductive materials, such as tin oxide, tin oxide doped with Sb, F or P, indium oxide doped with Sn and/or F, and antimony oxide, and carbon electrode.

Such an electrode layer can be formed by a hitherto publicly known method, such as a method comprising directly forming the above electrode on the second substrate by coating, plating or deposition, or a method comprising forming a conductive layer of the conductive material by a hitherto publicly method such as thermal decomposition method or CVD method and then plating or depositing the electrode material on the conductive layer.

The second substrate may be a transparent substrate similarly to the first substrate, and the second electrode layer may be a transparent electrode similarly to the first electrode layer. Further, the second substrate may be the same as the first substrate, and the second electrode layer may be the same as the first electrode layer.

The visible light transmittance of the transparent first substrate and the transparent first electrode layer is preferably high, and specifically, it is preferably not less than 50%, particularly preferably not less than 90%. If the visible light transmittance is less than 50%, the photoelectric conversion efficiency is sometimes lowered.

The resistance values of the first electrode layer and the second electrode layer are each preferably not more than 100 Ω/cm². If the resistance value of an electrode layer is more than 100 Ω/cm², the photoelectric conversion efficiency is sometimes lowered.

### Titanium oxide thin_film

In the present invention, a titanium oxide thin film is formed on the first electrode layer. This titanium oxide thin film is formed by the use of a peroxotitanic acid aqueous solution containing a thickener and is a dense film.

The film thickness of the titanium oxide thin film is 40 nm. If the film thickness of the titanium oxide thin film (1) is too small, inhibition of dark current and inhibition of recombination of electrons by the titanium oxide thin film become insufficient. If the film thickness of the titanium oxide thin film is too large, the energy barrier becomes so large that the electron transfer is inhibited, and the photoelectric conversion efficiency is sometimes lowered.

The pore volume of the titanium oxide thin film is 0.12 ml/g. If the pore volume is more than the above, denseness is lowered, contact of the electrolytic solution with the electrode occurs, and the effect of inhibiting backflow of electrons and recombination of electrons sometime becomes insufficient. It is possible to obtain a dense titanium oxide thin film by a sputtering method or the like, but the film is too dense to inhibit electron convert, or the adhesion to the porous metal oxide semiconductor film that is formed later sometimes becomes insufficient.

The mean pore diameter of the titanium oxide thin film is 2 nm. If the mean pore diameter of the titanium oxide thin film is more than the above, contact of the electrolytic solution with the electrode occurs, and the effect of inhibiting backflow of electrons and recombination of electrons sometime becomes insufficient.

Such a titanium oxide thin film can be formed by applying a peroxotitanic acid aqueous solution containing a thickener onto the first electrode layer by one or more methods selected from (A) spin coating method, (B) dip coating method, (C) flexographic printing method, (D) roll coater method and (E) electrophores is method, then drying the coating film and curing it.

The concentration of the peroxytitanic acid aqueous solution used for forming the titanium oxide thin film is in the range of preferably 0.1 to 2.0% by weight, more preferably 0.3 to 1.0% by weight, in terms of TiO₂. If the concentration of the peroxytitanic acid aqueous solution is too low, a titanium oxide thin film (1) having a desired film thickness is not obtained occasionally, and repeated coating and drying operations become necessary. If the concentration of the peroxytitanic acid aqueous solution is too high, cracks sometimes occur during drying, or a dense film cannot be formed occasionally, and the effect of inhibiting dark current and recombination of electrons cannot be obtained occasionally.

The peroxytitanic acid used herein means hydrated titanium peroxide and can be prepared by, for example, adding hydrogen peroxide to an aqueous solution of a titanium compound or a sol or gel of hydrated titanium oxide and heating them. More specifically, a titanium compound is hydrolyzed to prepare a sol or gel of orthotitanic acid first.

The gel of orthotitanic acid can be obtained by using, as a titanium compound, a titanium salt, such as titanium chloride, titanium sulfate or titanyl sulfate, adding an alkali to an aqueous solution of the titanium salt to neutralize the solution and washing the solution. The sol of orthotitanic acid can be obtained by passing an aqueous solution of the titanium salt through an ion-exchanged resin to remove anions or by adding an acid or an alkali to a solution of a titanium alkoxide, such as titanium tetramethoxide, titanium tetraethoxide or titanium tetraisopropoxide, in water and/or an organic solvent to perform hydrolysis.

The pH of the solution of the titanium compound in the neutralization or the hydrolysis is preferably in the range of 7 to 13. When pH of the titanium compound solution is in the above range, fine particles of the sol or gel of orthotitanic acid are obtained, and the later-described reaction with hydrogen peroxide becomes easy.

The temperature in the neutralization or the hydrolysis is in the range of preferably 0 to 60°C, particularly preferably 0 to 50°C. When the temperature in the neutralization or the hydrolysis is in the above range, fine particles of the sol or gel of orthotitanic acid are obtained, and the later-described reaction with hydrogen peroxide becomes easy. The orthotitanic acid particles in the resulting sol or gel are preferably non-crystalline.

Next, to the gel or sol of orthotitanic acid or a mixture of the gel and the sol is added hydrogen peroxide to dissolve the orthotitanic acid, whereby a peroxytitanic acid aqueous solution is prepared.

In the preparation of the peroxytitanic acid aqueous solution, the gel or sol of orthotitanic acid or a mixture of the gel and the sol is preferably heated to not lower than about 50°C or stirred, when necessary. If the concentration of the orthotitanic acid becomes too high in the preparation process, dissolution of the orthotitanic acid needs a long time, and besides, an undissolved gel is sometimes precipitated, or the resulting peroxytitanic acid aqueous solution sometimes becomes viscous. Therefore, the concentration of the orthotitanic acid is preferably not more than about 10% by weight, more preferably not more than about 5% by weight, in terms of TiO₂ concentration.

With regard to the amount of hydrogen peroxide added, if the H₂O₂/TiO₂ (orthotitanic acid: in terms of TiO₂) weight ratio is not less than 1, the orthotitanic acid can be completely dissolved. If the H₂O₂/TiO₂ weight ratio is less than 1, the orthotitanic acid cannot be completely dissolved, and an undissolved gel or sol sometimes remains. As the H₂O₂/TiO₂ weight ratio is increased, the rate of dissolving the orthotitanic acid becomes higher and the reaction is completed in a shorter period of time.. However, even if hydrogen peroxide is used in excess, unreacted hydrogen peroxide merely remains in the system, and this is not economical. When the hydrogen peroxide is used in such an amount as above, the orthotitanic acid is dissolved in about 0.5 to 20 hours. After the dissolution, the peroxytitanic acid aqueous solution for use in the invention is preferably aged at 50 to 90°C. Whenthisagingiscarriedout, particles which exhibit an X-ray diffraction pattern analogous to that of anatase though they are substantially non-crystalline and have a mean particle diameter of 10 to 50 nm are formed, and a titanium oxide thin film having the aforesaid pore volume and mean pore diameter can be obtained with excellent reproducibility.

Although the aging time varies depending upon the aging temperature, it is in the range of usually 1 to 25 hours.

The peroxytitanic acid aqueous solution for use in the invention may contain a thickener. As the thickener, ethylene glycol, polyethylene glycol, polyvinylpyrrolidone, hydroxypropyl cellulose, polyacrylic acid, ethyl cellulose polyvinyl alcohol, methanol, ethanol, isopropyl alcohol, normal butanol, tertiary butanol or the likemaybe contained. When such a thickener is contained in the peroxytitanic acid aqueous solution, viscosity of the coating solution is increased, and thereby the coating solution can be applied more uniformly. Hence, a titanium oxide thin film free from cracks and having a uniform thickness is obtained, and a titanium oxide thin film having high adhesion to the electrode layer that is a lower layer can be obtained.

Although the concentration of the thickener in the peroxytitanic acid aqueous solution varies depending upon the type of the thickener, it is in the range of preferably 1.0 to 60.0% by weight, more preferably 3. 0 to 35.0% by weight. If the concentration of the thickener is less than 1.0% by weight, the effect of using the thickener is insufficient. If the concentration of the thickener exceeds 60.0% by weight, the coating property is lowered, and the film thickness sometimes becomes too large or cracks sometimes occur. Hence, the effect of providing the titanium oxide thin film is not obtained occasionally.

When the peroxytitanic acid aqueous solution is applied by any one of (A) spin coating method, (B) dip coating method, (C) flexographic printing method, (D) roll coater method and (F) electrophoresis method, a titanium oxide thin film (1) which is excellent in adhesion to the electrode layer, has a uniform thickness, is free from cracks and has excellent strength can be formed. Particularly industrially, flexographic printing method is preferably adoptable.

The drying temperature has only to be a temperature at which water that is a dispersion medium can be removed, and for the drying, a hitherto publicly known method is adoptable. Although air-drying is also possible, drying is usually carried out at a temperature of 50 to 200°C for about 0.2 to 5 hours. In the present invention, after the coating film is dried, the later-described porous metal oxide semiconductor film can be formed, but after the coating film is dried and then cured, the porous metal oxide semiconductor film may be formed.

The coating film can be cured by the drying treatment only, but if necessary, the coating film is irradiated with ultraviolet rays and then subjected to heat treatment to perform annealing.

Irradiation with ultraviolet rays has only to be carried out in doses necessary for decomposition of the peroxotitanic acid and curing of the film. The heat treatment is carried out at a temperature of usually 200 to 500°C, preferably 300 to 450°C, for about 1 to 48 hours.

### Porous metal oxide semiconductor film

On the titanium oxide thin film a porous metal oxide semiconductor film is formed. The film thickness of the porous metal oxide semiconductor film is preferably in the range of 0.1 to 50 µm.

The porous metal oxide semiconductor film is formed from titanium oxide particles which comprise base particles made of anatase titanium oxide and anatase titanium oxide fine particle layers covering the surfaces of the base particles.

### Titanium oxide base particles

For the Titanium oxide base particles spherical titanium oxide is used. The base particles have a mean particle diameter of 400 nm.

In the case of small titanium oxide base particles, the metal oxide semiconductor film formed is liable to suffer occurrence of cracks, and it sometimes becomes difficult to form a thick film having the later-described thickness and free from cracks with a small number of operation times. Moreover, the pore diameter and the pore volume of the metal oxide semiconductor film are decreased to sometimes decrease adsorption quantity of a photosensitizer. If the titanium oxide base particles are too large, the particle intervals become large, and therefore, the quantity of light transmitted is increased to sometimes lower utilization of light, or the strength of the metal oxide semiconductor film sometimes becomes insufficient.

### Titanium oxide fine particles

The mean particle diameter of the titanium oxide fine particules covering the surfaces of the titanium oxide fine particles is 20 nm.

The titanium oxide base particles and the titanium oxide fine particules are made of crystalline anatase type titanium oxide.

### Titanium oxide particles

In the Titanium oxide particles for use in the invention, a titanium oxide fine particle layer is formed on the surface of the base particle. It is preferable that the titanium oxide particles are not bonded or aggregated to one another but monodispersed.

The coverage quantity of the titanium oxide fine particles is 40% by weight in the titanium oxide particles (that is, base particles and titanium oxide fine particles).

If the coverage quantity of the titanium oxide fine particles is too small, the adsorption quantity of a photosensitizer becomes insufficient because the titanium oxide fine particle layers are not sufficient, and hence, the photoelectric conversion efficiency sometimes becomes insufficient. If the coverage quantity of the titanium oxide fine particles in the titanium oxide particles is too large, the titanium oxide fine particle layer becomes thick, so that the electron transfer takes time similarly to the conventional semiconductor film composed of Titanium oxide fine particles only, and recombination of electrons is liable to occur. Therefore, the photoelectric conversion efficiency sometimes becomes insufficient.

The mean particule diameter of the titanium oxide particles is 450 nm. If the titanium oxide particles are too small, the pores of the semiconductor film after the film formation are small, long and curved, so that the electron transfer takes time, and recombination of electrons is liable to occur. Therefore, the photoelectric conversion efficiency sometimes becomes insufficient. If the titanium oxide particles are too large, the film strength is lowered because of too large particles, or the quantity of light transmitted is increased because the voids among the particles are enlarged, or the utilization of light is lowered because of insufficient reflection. Therefore, the photoelectric conversion efficiency sometimes becomes insufficient.

The process for preparing the titanium oxide particles for use in the invention is not specifically restricted provided that the titanium oxide is obtained, but for example, a dispersion of titanium oxide base particles is mixed with titanium oxide fine particles so that the quantity of the titanium oxide fine particles in the titanium oxide particles would become the aforesaid given quantity, to prepare a dispersion. Then, pH of the dispersion is controlled to about 10 to 13, when necessary, and the dispersion is further subjected to aging (hydrothermal treatment) at about 100 to 300°C, when necessary.

As the dispersion media, water, alcohol, glycol, ketone, ester, etc., and a mixed liquid thereof are employable.

With regard to the concentration of the mixed dispersion, the total concentration of the titanium oxide base particles and the titanium oxide fine particles is in the range of preferably 1. 0 to 50% by weight, more preferably 5. 0 to 25% by weight, in terms of an oxide.

If the concentration of the mixed dispersion is too low, sufficient covering with the titanium oxide fine particles cannot be carried out occasionally. If the concentration of the mixed dispersion is too high, the resulting titanium oxide particles become aggregates, and it is difficult to prepare a coating material for forming a semiconductor film. Moreover, application also becomes difficult, and the strength of the resulting metal oxide semiconductor film sometimes becomes insufficient.

Instead of using the titanium oxide fine particle dispersion, the same peroxytitanic acid aqueous solution as used for forming the aforesaid titanium oxide thin film or an aqueous solution obtained by aging the peroxytitanic acid aqueous solution at 50 to 90 °C may be used. In the aged aqueous solution of peroxotitanic acid, particles having a mean particle diameter of 10 to 50 nm have been formed, while the aqueous solution before aging is a solution having transparency which is in the stage prior to the stage of such particle formation.

Accordingly, by subjecting such a peroxytitanic acid aqueous solution to hydrothermal treatment together with the titaniumoxide base particles, titaniumoxide fine particles are formed on the surfaces of the titanium oxide fine base particles, and a titanium oxide particle layer wherein the titanium oxide fine particles are bonded can be obtained.

Beside, the fine particle layer may be formed by adding the peroxytitanic acid aqueous solution to the above obtained titanium oxide fine particles.

The pore volume of the porous metal oxide semiconductor film is in the range of preferably 0.10 to 0.80 ml/g, more preferably 0.20 to 0.65 ml/g.

In the case of a porous metal oxide semiconductor film having a small pore volume, adsorption of a sensitizing dye becomes insufficient, or diffusion property of the electrolyte is lowered to sometimes cause back current, and hence, the conversion efficiency sometimes becomes insufficient. If the pore volume is too large, the strength of the metal oxide semiconductor film sometimes becomes insufficient.

The porous metal oxide semiconductor filmhas pores having pore diameters of 1 to 15 nm attributable to particle voids among the fine particles that form the titanium oxide fine particle layer, and has pores having pore diameters of 20 to 500 nm attributable to particle voids among the titanium oxide particles.

To the process for producing such a porous metal oxide semiconductor film, the process for producing a metal oxide semiconductor film disclosed in Japanese Patent Laid-Open Publication No. 339867/1999 applied by the present applicant is preferably applicable, except that the porous metal oxide semiconductor film-forming coating solution containing the above-mentioned titanium oxide particles is used.

More preferably, the porous metal oxide semiconductor film can be formed by applying the later-described coating material for forming a porous metal oxide semiconductor film for a photovoltaic cell according the invention onto the electrode layer or the titanium oxide thin film that is formed when necessary, drying the coating film and then subjecting the film to irradiation with ultraviolet rays or heating to cure the film.

In the photovoltaic cell according to the invention, a photosensitizer is adsorbed on the porous metal oxide semiconductor film (1).

### Photosensitizer

The photosensitizer is not specifically restricted provided that it absorbs light of visible region, ultraviolet region or infrared region and is excited. For example, organic dyes and metal complexes are employable.

As the organic dyes, hitherto publicly known organic dyes having a functional group, such as carboxyl group, hydroxyalkyl group, hydroxyl group, sulfone group or carboxylalkyl group, in a molecule are employable. Examples of the organic dyes include metal-free phthalocyanine, cyanine dyes, metallocyanine dyes, triphenylmethane dyes, and xanthene dyes, such as Uranin, eosin, rose Bengal, rhodamine B and dibromofluorescein. These organic dyes have properties that the rate of adsorption on the metal oxide semiconductor film is high.

Examples of the metal complexes include metallophthalocyanines, such as copper phthalocyanine and titanyl phthalocyanine, and complexes of ruthenium, osmium, iron and zinc, specifically, chlorophyll, hemin, ruthenium-tris(2,2'-bispyridyl-4,4'-dicarboxylate), cis(SCN⁻)-bis(2,2'-bipyridyl-4,4'-dicarboxylate)ruthenium, ruthenium-cis-diaqua-dipyridyl complexes, such as ruthenium-cis-diaqua-bis(2,2'-bipyridyl-4,4'-dicarboxylate), porphyrins such as zinc-tetra(4-carboxyphenyl)porphyrin, and iron-hexacyanide complex, which are described in Japanese Patent Laid-Open Publication No. 220380/1989, National Publication of International Patent No. 504023/1993, etc. These metal complexes are excellent in spectral sensitization effect and durability.

As the photosensitizers, the above organic dyes and the above metal complexes may be used singly, or the organic dyes or the metal complexes may be used as a mixture of two or more kinds, or the organic dyes and the metal complexes may be used in combination.

The adsorption quantity of the photosensitizer on the porous metal oxide semiconductor film is preferably not less than 100 µg, more preferably not less than 150 µg, based on 1 cm² of the specific surface area of the porous metal oxide semiconductor film. If the adsorption quantity of the photosensitizer on the porous metal oxide semiconductor film is too small, the photoelectric conversion efficiency becomes insufficient.

The method for adsorbing the photosensitizer is not specifically restricted, and a general method such as a method comprising allowing the porous metal oxide semiconductor film to absorb a solution obtained by dissolving the photosensitizer in a solvent, by dipping method, spinner method, spraying method or the like and then drying is adoptable. The above absorption step may be repeated when necessary. It is also possible that the photosensitizer solution is brought into contact with the substrate to allow the porous metal oxide semiconductor film to adsorb the photosensitizer, with refluxing the photosensitizer solution under heating.

As the solvent to dissolve the photosensitizer, any solvent is employable provided that it dissolves the photosensitizer. Specifically, water, alcohols, toluene, dimethylformamide, chloroform, ethyl cellosolve, N-methylpyrrolidone, tetrahydrofuran, etc. are employable.

The concentration of the photosensitizer in the photosensitizer solution is desirably such a concentration that the amount of the photosensitizer becomes not less than 100 µg, preferably not less than 200 µg, based on 1 cm² of the specific surface area of the porous metal oxide semiconductor film.

In the present invention, the photovoltaic cell can be produced by arranging the substrate (1) having the electrode layer (1) on its surface, having the titanium oxide thin film (1) on the electrode layer (1) when necessary and having the porous metal oxide semiconductor film (1) which has adsorbed the photosensitizer and is formed on the electrode layer (1) or the titanium oxide thin film (1) and the substrate (2) having the electrode layer (2) on its surface in such a manner that the electrode layer (1) and the electrode layer (2) face each other, then sealing the sides with a resin, enclosing an electrolyte between the porous metal oxide semiconductor film (1) and the electrode layer (2) and connecting the electrodes to each other with a lead wire.

### Electrolyte layer

As the electrolyte, a mixture of an electrochemically active salt and at least one compound which forms oxidation-reduction system together with the salt is utilized.

Examples of the electrochemically active salts include quaternary ammonium salts, such as tetrapropylammonium iodide. Examples of the compounds which form oxidation-reduction system include quinine, hydroquinone, iodine (I⁻/I⁻₃), potassium iodide, bromine (Br⁻/Br⁻₃) and potassium bromide. In some cases, they can be used as a mixture of them.

Although the amount of the electrolyte used varies depending upon the type of the electrolyte and the type of the below-described solvent, it is preferably in the range of about 0.1 to 5 mol/liter.

For the electrolyte layer, a hitherto publicly known solvent is employable. Examples of the solvents include water, alcohols, oligoethers, carbonates such as propion carbonate, phosphoric acid esters, dimethylformamide, dimethyl sulfoxide, N-methylpyrrolidone, N-vinylpyrrolidone, sulfur compounds such as sulfolane 66, ethylene carbonate, acetonitrile andy-butyrolactone.

The electrolyte may be dissolved inan ionic liquid. The ionic liquid is a salt which is melted at ordinary temperature, and has high ion density and high ionic mobility. Therefore, it exhibits extremely high ionic conductivity. On this account, the ionic liquid can be also used as a matrix of the electrolyte.

Examples of the ionic liquids include imidazolinium salts, pyridinium salts, ammonium salts, 2-methyl-1-pyrroline, 1-methylpyrazole and 1-ethylcarbazole. These can be made to have high molecular weight, and if necessary, these can be allowed to gel.

The electrolytic solution may further contain an ionic conduction accelerator. The ionic conduction accelerator is, for example, at least one substance selected from the group consisting of titanium oxide nanotube, fibrous titanium oxide and carbon nanotube. When the electrolytic solution contains them, conduction of ions is accelerated, and high photoelectric conversion efficiency can be exhibited. Although the reason is not clear, it is considered that their particles are linear long particles, and the electrolyte is orientated on the surfaces of these particles, and electrons or ions flow through the shortest route, so that the ion conduction is accelerated.

Even if the electrolytic solution gels, there is no harm. Especially when the electrolytic solution gels, it does not suffer leakage, so that gelation is advantageous.

In the present invention, a solid electrolyte is employable as the electrolyte. As the solid electrolytes, not only CuI, CuBr, CuSCN, polyaniline, polypyrrole, polythiofen, arylamine-based polymer, polymer having acrylic group and/or methacrylic group, polyvinylcarbazole, triphenyldiamine polymer, L-valine derivative low-molecular gel, polyoligoethylene glycol methacrylate, poly(o-mehoxyaniline), poly(epichlorohydrin-Co-ethylene oxide), 2,2',7,7'-tetrakis(N,N-di-P-methoxyphenylamine)-9,9'-spirobifluo rene, fluorine-based ion-exchange resin having proton conduction property, such as perfluorosulfonate, perfouorocarbon copolymer and perfluorocarbonsulfonic acid but also polyethylene oxide and a substance obtained by the ionic gel method such as a method comprising forming a pair of anion and cation from imidazole cation and Br⁻, BR⁻₄ or N⁻ (SO₂CF₃)₂, then adding a vinyl monomer or a PMMA monomer to this and polymerizing them can be preferably used. In the case where these solid electrolytes are used, the components to constitute the solid electrolyte are dispersed or dissolved in a solvent, then the ionic conduction accelerator is further dispersed, thereafter the resulting dispersion is poured between the electrodes, then the solvent is removed when necessary, and the inlet is sealed, whereby a photovoltaic cell is formed. The solid electrolyte used herein is intended to include an electrolyte in the form of a gel.

When the electrolyte is in the form of a gel, its viscosity is preferably not less than 1000 cp, more preferably 2000 to 10000 cp. If the viscosity of the electrolyte is not less than 1000 cp, the electrolyte is free from dissipation. On this account, even if the electrolyte is used for a long time, the photoelectric conversion efficiency is not lowered, and the electrolyte does not cause corrosion.

The content of the ionic conduction accelerator in the electrolyte layer is in the range of preferably 5 to 40% by weight, more preferably 10 to 30% by weight, in terms of solids content. When the content is in this range, gelation takes place sufficiently, and the ionic conduction acceleration effect can be enhanced.

Next, the coating material for forming a porous metal oxide semiconductor film for a photovoltaic cell manufactured according to the invention is described.

### Coating material for forming porous metal oxide semiconductor film for photovoltaic cell

The coating material for forming a porous metal oxide semiconductor film for a photovoltaic cell manufactured according to the invention comprises titanium oxide particles which comprise base particles made of titanium oxide and titanium oxide fine particles covering the surfaces of the base particles.

### Titanium oxide particles

As the titanium oxide particles, the aforesaid titanium oxide particles are used.

### Dispersion medium

As the dispersion medium of the coating material, one or more media selected from water, alcohols, ketones, glycols, ethers and terpins-are used.

Examples of the alcohols include methanol, ethanol, isopropyl alcohol and butanol. Examples of the ketones include acetone. Examples of the glycols include ethylene glycol and propylene glycol. Examples of the ethers include butyl carbitol and butyl carbitol acetate. Examples of the terpins include terpineol, dihydroterpineol and terpinolene.

In a screen printing method, a coating material in which the titanium oxide particles are dispersed in a solvent, such as terpineol or butyl carbitol, is preferably used.

In a printing method requiring quick drying, aqueous dispersion media containing water and alcohols having a relatively low-boiling point, such as methanol, ethanol, isopropyl alcohol and butanol, can be preferably used because such dispersion media can homogenously disperse or dissolve the titanium oxide particles and the below-described thickener that is used when necessary, and besides, when a titanium oxide particle layer is dried after it is formed on the substrate, such dispersion media are readily evaporated.

### Thickener

In the coating material a thickener may be contained, and examples of the thickeners include polyethylene glycol, polyvinylpyrrolidone, hydroxypropyl cellulose, polyacrylic acid, ethyl cellulose, methyl cellulose, carboxymethyl methyl cellulose, polyvinyl alcohol, acrylic resin, ketone resin and melamine resin. When such a thickener is contained in the porous metal oxide semiconductor film-forming coating material, viscosity of the coating material is increased, and thereby the coating material can be applied more uniformly, and a porous metal oxide semiconductor film having the aforesaid pore volume and pore diameter can be obtained.

Although the concentration of the thickener in the porous metal oxide semiconductor film-forming coating material varies depending upon the type of the thickener, it is in the range of preferably 1.0 to 40.0% by weight, more preferably 4.0 to 10.0% by weight. If the concentration of the thickener is too low, the effect of using the thickener becomes insufficient. If the concentration of the thickener is too high, not only the coating property is lowered but also the strength of the resulting semiconductor film becomes insufficient. Moreover, it becomes difficult to remove the thickener completely, and the effect of sufficiently enhancing the photoelectric conversion efficiency is not obtained occasionally.

The concentration of the titanium oxide particles in the porous metal oxide semiconductor film-forming coating material is in the range of preferably 1 to 30% by weight, more preferably 2 to 20% by weight, in terms of titanium oxide (when a binder and peroxytitanic acid are contained together with the titanium oxide particles, the total amount of them and the particles is in the above range in terms of titanium oxide, as described later).

If the concentration is less than 1% by weight, a metal oxide semiconductor film having a desired thickness cannot be formed occasionally by an operation of one time because of too low concentration, and repeated operations become necessary. If the concentration exceeds 30% by weight, viscosity of the dispersion becomes high, and the denseness of the resulting metal oxide semiconductor film is lowered. Therefore, the strength and the abrasion resistance of the semiconductor film become insufficient. In addition, the electron transfer property is lowered, and the photoelectric conversion efficiency sometimes becomes insufficient.

In the porous metal oxide semiconductor film-forming coating material, peroxytitanic acid may be contained when necessary. When the peroxytitanic acid is contained, a porous metal oxide semiconductor film excellent not only in denseness and strength but also in electron transfer property is obtained. Moreover, the adsorption quantity of the photosensitizer is increased, and as a result, the photoelectric conversion efficiency is enhanced. The amount of the peroxytitanic acid used in the coating material is in the range of preferably 1 to 30% by weight, more preferably 2 to 15% by weight, in terms of titanium oxide, based on the titanium oxide particles.

If the amount of the peroxytitanic acid is too small, the effect of enhancing the adhessiveness with the titanium oxide thin film (1) and the strength of the semiconductor film, the effect of increasing the adsorption quantity of the photosensitizer, the effect of enhancing the photoelectric conversion efficiency, etc. sometimes become insufficient. Even if the amount of the peroxytitanic acid is increased, the above effects are not further raised, and the photoelectric conversion efficiency is sometimes lowered.

By applying a porous metal oxide semiconductor film-forming coating material onto the electrode layer or the titanium oxide thin film, then drying the coating material, thereafter curing the resulting film by irradiation with ultraviolet rays or by heating and annealing the film, a semiconductor film is formed.

As the application method, dipping method, spinner method, roll coater method, flexographic printing method, screen printing method or the like is preferable.

The drying temperature has only to be a temperature at which the dispersion medium can be removed, and for the drying, a hitherto publicly known method is adoptable. Air-drying is also possible, but in usual, drying is carried out at a temperature of 50 to 200°C for about 0.2 to 5 hours. Although the ultraviolet irradiation dose varies depending upon the content of peroxotitanic acid, etc., the film has only to be irradiated in doses necessary for decomposition of the peroxotitanic acid and curing of the film. The heat treatment is carried out at a temperature of usually 200 to 600°C, preferably 300 to 500°C, for about 1 to 48 hours.

The film thickness of the thus obtained porous metal oxide semiconductor film is preferably in the range of 0.1 to 50 µm.

### EXAMPLES

The present invention is further described with reference to the following examples. Examples 1 and 3-11 are for reference and Example 2 illustrates the invention.

### Preparation Example of titanium oxide particles Preparation of_titanium oxide particle (T1) dispersion

60 g of a titanium oxide base particle dispersion (available from Catalysts & Chemicals Industries Co., Ltd., HPW-400C, mean particle diameter: 400 nm, TiO₂ concentration: 20% by weight) and 40 g of a titanium oxide fine particle dispersion (available from Catalysts & Chemicals Industries Co., Ltd., HPW-18NR, mean particle diameter: 20 nm, TiO₂ concentration: 20% by weight) were mixed. The mixture was controlled so that the total TiO₂ concentration would become 7.5% by weight, and then subjected to hydrothermal treatment at 235 °C for 8 hours in an autoclave. Subsequently, the resulting dispersion was concentrated by the ultrafiltration membrane method to prepare a titanium oxide particle (T1) dispersion having a TiO₂ concentration of 20% by weight.

### Preparation of titanium oxide particle (T2) dispersion

A titanium oxide particle (T2)-dispersion having a TiO₂ concentration of 20% by weight was prepared in the same manner as in the preparation of titanium oxide particle (T1) dispersion, except that 15 g of a titanium oxide fine particle dispersion (available from Catalysts & Chemicals Industries Co., Ltd., HPW-18NR, mean particle diameter: 20 nm, TiO₂ concentration 20% by weight) was mixed.

### Preparation of titanium oxide particle (T3) dispersion

A titanium oxide particle (T3) dispersion having a TiO₂ concentration of 20% by weight was prepared in the same manner as in the preparation of titanium oxide particle (T1) dispersion, except that 90 g of a titanium oxide fine particle dispersion (available from Catalysts & Chemicals Industries Co., Ltd., HPW-18NR, mean particle diameter: 20 nm, TiO₂ concentration: 20% by weight) was mixed.

### Preparation of titanium oxide particle (T4) dispersion

A titanium oxide particle (T4) dispersion having a TiO₂ concentration of 20% by weight was prepared in the same manner as in the preparation of titanium oxide particle (T1) dispersion, except that 40 g of a titanium oxide fine particle dispersion (available fromCatalysts & Chemicals Industries Co., Ltd., HPW-10R, meanparticle diameter: 10 nm, TiO₂ concentration: 20% by weight) was mixed.

### Preparation of titanium oxide particle (T5) dispersion

A titanium oxide particle (T5) dispersion having a TiO₂ concentration of 20% by weight was prepared in the same manner as in the preparation of titanium oxide particle (T1) dispersion, except that 40 g of a titanium oxide fine particle dispersion (available from Catalysts & Chemicals Industries Co., Ltd., HPW-30NRD, mean particle diameter: 35 nm, TiO₂ concentration: 20% by weight) was mixed.

### Preparation of titanium oxide particle (T6) dispersion

A titanium oxide particle (T6) dispersion having a TiO₂ concentration of 20% by weight was prepared in the same manner as in the preparation of titanium oxide particle (T1) dispersion, except that 60 g of a titanium oxide base particle dispersion (available from Catalysts & Chemicals Industries Co., Ltd., HPW-200C, mean particle diameter: 200 nm, TiO₂ concentration: 20% by weight) was mixed.

### Preparation of titanium oxide particle (T7) dispersion

A titanium oxide particle (T7) dispersion having a TiO₂ concentration of 20% by weight was prepared in the same manner as in the preparation of titanium oxide particle (T1) dispersion, except that 60 g of a solution obtained by dispersing titanium oxide base particles (available from Fuji Titanium Industry Co., Ltd., TA-300, mean particle diameter of aggregated particles: 500 nm) in water so that the TiO₂ concentration would become 20% by weight was mixed.

### Preparation of titanium oxide particle (T8) dispersion

A titanium oxide particle (T8) dispersion having a TiO₂ concentration of 20% by weight was prepared in the same manner as in the preparation of titanium oxide particle (T1) dispersion, except that 150 g of a tubular titanium oxide base particle dispersion (mean outer diameter: 10 nm, mean inner diameter: 7.5 nm, mean length: 175 nm, TiO₂ concentration: 8.0% by weight) prepared by the process shown in Example 3 of Japanese Patent Laid-Open Publication No. 137549/2003 was mixed.

### Preparation of titanium oxide particle (T9) dispersion Preparation of peroxytitanic acid aqueous solution (1)

18.3 g of titanium tetrachloride was diluted with pure water to obtain an aqueous solution containing titanium tetrachloride in an amount of 1.0% by weight in terms of TiO₂. With stirring the aqueous solution, aqueous ammonia having a concentration of 15% by weight was added to obtain a white slurry having pH of 9.5. This slurry was subjected to filtration washing to obtain a cake of a hydrated titanium oxide gel having a concentration of 10.2% by weight in terms of TiO₂. This cake was mixed with 400 g of aqueous hydrogen peroxide having a concentration of 5%, and then the mixture was heated at 80°C for 2 hours to dissolve the cake, whereby a peroxotitanic acid aqueous solution having a concentration of 1.0% by weight in terms of TiO₂ was obtained.

Subsequently, a titanium oxide particle (T9) dispersion having a TiO₂ concentration of 20% by weight was prepared in the same manner as in the preparation of titanium oxide particle (T1) dispersion of Example 1, except that when hydrothermal treatment was carried out in an autoclave, the peroxotitanic acid aqueous solution (1) was added amount of 20 % by weight of the whole titanium oxide.

In the titanium oxide particles (T9), titanium oxide fine particles having a mean particle diameter of 22 nm covered the surfaces of the titanium oxide base particles in layers.

### Preparation of titanium oxide particle (T10) dispersion

A titanium oxide particle (T10) dispersion having a TiO₂ concentration of 20% by weight was prepared in the same manner as in the preparation of titanium oxide particle (T1) dispersion, except that 800 g of the peroxotitanic acid solution (1) was mixed instead of titanium oxide fine particle dispersion (available from Catalysts & Chemicals Industries Co., Ltd., HPW-18NR, mean particle diameter: 20 nm, TiO₂ concentration: 20% by weight).

In the titanium oxide particles (T10), titanium oxide fine particles having a mean particle diameter of 21 nm covered the surfaces of the titanium oxide base particles in layers.

### Example 1

### Preparation of porous metal oxidesemiconductor film-forming coating material (1)

A solution obtained by dissolving 8 g of ethyl cellulose in 100 g of the titanium oxide particle (T1) dispersion prepared above and adding 75 g of terpineol was concentrated by a rotary evaporator so that the TiO₂ concentration would become 19% by weight, whereby a porous metal oxide semiconductor film-forming coating material (1) was prepared.

### Formation of porous metal oxide semiconductor film (1)

Screen printing of the porous metal oxide semiconductor film-forming coating material (1) on a transparent glass substrate on which an electrode layer of fluorine-doped tin oxide had been formed and drying were repeated until the film thickness became 12 µm. Thereafter, the resulting film was subjected to calcining/annealing at 450°C to form a porous metal oxide semiconductor film (1).

Film thickness of the resulting porous metal oxide semiconductor film (1), pore volume thereof as determined by the nitrogen adsorption method, and mean pore diameter thereof are set forth in the table. Further, adhesion of the porous metal oxide semiconductor film (1) was evaluated, and the result is set forth in Table 1.

### Adhesion

On a surface of the porous metal oxide semiconductor film (1), 11 parallel lines were cut with a knife lengthwise and crosswise at intervals of 1 mm to form 100 squares, and a cellophane tape was attached onto the surface. Then, the cellophane tape was peeled off, and the number of squares of the coating film remaining without being separated was counted. The number obtained was classified as any one of the following four groups to evaluate adhesion. The result is set forth in the table.

AA: The number of residual squares is 100.
BB: The number of residual squares is in the range of 90 to-99.
CC: The number of residual squares is in the range of 85 to 89.
DD: The number of residual squares is not more than 84.

### Adsorption of photosensitizer

As a photosensitizer, B2 dye available from DYESOL Co. was dissolved in ethanol so that the concentration would become 0.1% by weight, to prepare an ethanol solution. The glass on which the porous metal oxide semiconductor film (1) had been formed was immersed in this solution for 5 hours, then taken out and washed with an ethanol aqueous solution to allow the semiconductor film to adsorb the dye.

### Preparation of photovoltaic cell (1)

First, in a mixed solvent of acetonitrile and ethylene carbonate in a volume ratio of 1:4, tetrapropylammonium iodide and iodine were dissolved so that the concentrations of tetrapropylammonium iodide and iodine would become 0.46mol/liter and 0.06mol/liter, respectively, to prepare an electrolyte solution.

The electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (1).

The photovoltaic cell (1) was irradiated with light having an intensity of 100 W/m² at an angle of incidence of 90° (90° to the cell surface) by means of a solar simulator to measure Voc (voltage in a state of open circuit), Joc (density of current flowing at the time of short-circuiting), FF (curve factor) and η (conversion efficiency). The results are set forth in Table 1.

### Example 2

### Preparation of peroxytitanic acid coating solution (1)

18.3 g of titanium tetrachloride was diluted with pure water to obtain an aqueous solution containing titanium tetrachloride in an amount of 1.0% by weight in terms of TiO₂. With stirring the aqueous solution, aqueous ammonia having a concentration of 15% by weight was added to obtain a white slurry having pH of 9.5. This slurry was subjected to filtration washing to obtain a cake of a hydrated titanium oxide gel having a concentration of 10.2% by weight in terms of TiO₂. This cake was mixed with 400 g of aqueous hydrogen peroxide having a concentration of 5%, and then the mixture was heated at 80 °C for 2 hours to dissolve the cake, whereby a peroxotitanic acid aqueous solution (1) having a concentration of 1.0% by weight in terms of TiO₂ was obtained. Further, to the peroxotitanic acid aqueous solution were added water and ethylene glycol so that the TiO₂ concentration would become 0. 5% and the ethylene glycol concentration would become 20%, whereby a peroxotitanic acid coating solution (1) was obtained.

### Formation of titanium oxide thin film (1)

A transparent glass substrate on which an electrode of fluorine-doped tin oxide had been formed was coated with the peroxotitanic acid coating solution (1) by flexographic printing, followedbyair-drying. Subsequently,the coatingfilm wasirradiated with ultraviolet rays at 6000 mJ/cm² by the use of a low-pressure mercury lamp to decompose peroxo acid and cure the film. Further, the film was heated at 450°C for 30 minutes to perform curing and annealing, whereby a titanium oxide thin film (1) was formed.

The resulting titanium oxide thin film (1) had a film thickness of 40 nm, a pore volume, as determined by the nitrogen adsorption method, of 0.12 ml/g and a mean pore diameter of 2 nm.

### Formation of porous metal oxide semiconductor film (2)

Screen printing of a porous metal oxide semiconductor film-forming coating material (1) prepared in the same manner as in Example 1 on the transparent glass substrate on which the electrode layer of fluorine-doped tin oxide had been formed and the titanium oxide thin film (1) had been further formed and drying were repeated until the film thickness became 12 µm. Thereafter, the resulting film was subjected to calcining/annealing at 450°C to form a porous metal oxide semiconductor film (2).

Film thickness of the resulting porous metal oxide semiconductor film (2), pore volume thereof as determined by the nitrogen adsorption method, and mean pore diameter thereof are set forth in the table. Further, adhesion of the porous metal oxide semiconductor film (2) was evaluated, and the result is set forth in Table 1.

### Adsorption of photosensitizer

A dye was adsorbed in the same manner as in Example 1, except that the transparent glass substrate on which the titanium oxide thin film (1) and the porous metal oxide semiconductor film (2) had been formed was used.

### Preparation of photovoltaic cell (2)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (2).

Voc, Joc, FF and η of the photovoltaic cell (2) were measured, and the results are set forth in Table 1.

### Example 3

### Preparation of porous metal oxide semiconductor film-forming coating material (3)

A solution obtained by dissolving 8 g of ethyl cellulose in 100 g of the titanium oxide particle (T2) dispersion prepared above and adding 75 g of terpineol was concentrated by a rotary evaporator so that the TiO₂ concentration would become 19% by weight, whereby a porous metal oxide semiconductor film-forming coating material (3) was prepared.

### Formation of porous metal oxide semiconductor film (3)

In the same manner as in Example 2, screen printing of the porous metal oxide semiconductor film-forming coating material (3) on the transparent glass substrate on which the titanium oxide thin film (1) had been formed and drying were repeated until the film thickness became 12 µm. Thereafter, the resulting film was subjected to calcining/annealing at 450 °C to forma porous metal oxide semiconductor film (3).

Film thickness of the resulting porous metal oxide semiconductor film (3), pore volume thereof as determined by the nitrogen adsorption method, and mean pore diameter thereof are set forth in the table. Further, adhesion of the porous metal oxide semiconductor film (3) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (3) had been formed was used.

### Preparation of photovoltaic cell (3)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (3).

Voc, Joc, FF and η of the photovoltaic cell (3) were measured, and the results are set forth in Table 1.

### Example 4

### Preparation of porous metal oxide semiconductor film-forming coating material (4)

A solution obtained by dissolving 8 g of ethyl cellulose in 100 g of the titanium oxide particle (T3) dispersion prepared above and adding 75 g of terpineol was concentrated by a rotary evaporator so that the TiO₂ concentration would become 19% by weight, whereby a porous metal oxide semiconductor film-forming coating material (4) was prepared.

### Formation of porous metal oxide semiconductor film (4)

In the same manner as in Example 2, screen printing of the porous metal oxide semiconductor film-forming coating material (4) on the transparent glass substrate on which the titanium oxide thin film (1) had been formed and drying were repeated until the film thickness became 12 µm. Thereafter, the resulting film was subjected to calcining/annealing at 450 °C to forma porous metal oxide semiconductor film (4).

Film thickness of the resulting porous metal oxide semiconductor film (4), pore volume thereof as determined by the nitrogen adsorption method, and mean pore diameter thereof are set forth in the table. Further, adhesion of the porous metal oxide semiconductor film (4) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (4) had been formed was used.

### Preparation of photovoltaic cell (4)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (4).

Voc, Joc, FF and η of the photovoltaic cell (4) were measured, and the results are set forth in Table 1.

### Example 5

### Preparation of porous metal oxide semiconductorfilm-forming coating material (5)

A solution obtained by dissolving 8 g of ethyl cellulose in 100 g of the titanium oxide particle (T4) dispersion prepared above and adding 75 g of terpineol was concentrated by a rotary evaporator so that the TiO₂ concentration would become 19% by weight, whereby a porous metal oxide semiconductor film-forming coating material (5) was prepared.

### Formation of porous metal oxide semiconductor film (5)

In the same manner as in Example 2, screen printing of the porous metal oxide semiconductor film-forming coating material (5) on the transparent glass substrate on which the titanium oxide thin film (1) had been formed and drying were repeated until the film thickness became 12 µm. Thereafter, the resulting film was subjected to calcining/annealing at 450°C to forma porous metal oxide semiconductor film (5).

Film thickness of the resulting porous metal oxide semiconductor film (5), pore volume thereof as determined by the nitrogen adsorption method, and mean pore diameter thereof are set forth in the table. Further, adhesion of the porous metal oxide semiconductor film (5) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (5) had been formed was used.

### Preparation of photovoltaic cell (5)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (5).

Voc, Joc, FF and η of the photovoltaic cell (5) were measured, and the results are set forth in Table 1.

### Example 6

### Preparation of porous metal oxide semiconductor film-forming coating material (6)

A solution obtained by dissolving 8 g of ethyl cellulose in 100 g of the titanium oxide particle (T5) dispersion prepared above and adding 75 g of terpineol was concentrated by a rotary evaporator so that the TiO₂ concentration would become 19% by weight, whereby a porous metal oxide semiconductor film-forming coating material (6) was prepared.

### Formation of porous metal oxide semiconductor film (6)

In the same manner as in Example 2, screen printing of the porous metal oxide semiconductor film-forming coating material (6) on the transparent glass substrate on which the titanium oxide thin film (1) had been formed and drying were repeated until the film thickness became 12 µm. Thereafter, the resulting film was subjected to calcining/annealing at 450 °C to form a porous metal oxide semiconductor film (6).

Film thickness of the resulting porous metal oxide semiconductor film (6), pore volume thereof as determined by the nitrogen adsorption method, and mean pore diameter thereof are set forth in the table. Further, adhesion of the porous metal oxide semiconductor film (6) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (6) had been formed was used.

### Preparation of photovoltaic cell (6)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (6).

Voc, Joc, FF and η of the photovoltaic cell (6) were measured, and the results are set forth in Table 1.

### Example 7

### Preparation of porous metal oxide semiconductor film-forming coating material (7)

A solution obtained by dissolving 8 g of ethyl cellulose in 100 g of the titanium oxide particle (T6) dispersion prepared above and adding 75 g of terpineol was concentrated by a rotary evaporator so that the TiO₂ concentration would become 19% by weight, whereby a porous metal oxide semiconductor film-forming coating material (7) was prepared.

### Formation of porous metal oxide semiconductor film (7)

In the same manner as in Example 2, screen printing of the porous metal oxide semiconductor film-forming coating material (7) on the transparent glass substrate on which the titanium oxide thin film (1) had been formed and drying were repeated until the film thickness became 12 µm. Thereafter, the resulting film was subjected to calcining/annealing at 450 °C to form a porous metal oxide semiconductor film (7).

Film thickness of the resulting porous metal oxide semiconductor film (7), pore volume thereof as determined by the nitrogen adsorption method, and mean pore diameter thereof are set forth in the table. Further, adhesion of the porous metal oxide semiconductor film (7) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (7) had been formed was used.

### Preparation of photovoltaic cell (7)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (7).

Voc, Joc, FF and η of the photovoltaic cell (7) were measured, and the results are set forth in Table 1.

### Example 8

### Preparation of porous metal oxide semiconductor film-forming coating material (8)

A solution obtained by dissolving 8 g of ethyl cellulose in 100 g of the titanium oxide particle (T7) dispersion prepared above and adding 75 g of terpineol was concentrated by a rotary evaporator so that the TiO₂ concentration would become 19% by weight, whereby a porous metal oxide semiconductor film-forming coating material (8) was prepared.

### Formation of porous metal oxide semiconductor film (8)

In the same manner as in Example 2, screen printing of the porous metal oxide semiconductor film-forming coating material (8) on the transparent glass substrate on which the titanium oxide thin film (1) had been formed and drying were repeated until the film thickness became 12 µm. Thereafter, the resulting film was subjected to calcining/annealing at 450°C to form a porous metal oxide semiconductor film (8).

Film thickness of the resulting porous metal oxide semiconductor film (8), pore volume thereof as determined by the nitrogen adsorption method, and mean pore diameter thereof are set forth in the table. Further, adhesion of the porous metal oxide semiconductor film (8) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (8) had been formed was used.

### Preparation of photovoltaic cell (8)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (8).

Voc, Joc, FF and η of the photovoltaic cell (8) were measured, and the results are set forth in Table 1.

### Example 9

### Preparation of porous metal oxide semiconductor film-forming coating material (9)

A solution obtained by dissolving 8 g of ethyl cellulose in 100 g of the titanium oxide particle (T8) dispersion prepared above and adding 75 g of terpineol was concentrated by a rotary evaporator so that the TiO₂ concentration would become 19% by weight, whereby a porous metal oxide semiconductor film-forming coating material (9) was prepared.

### Formation of porous metal oxide semiconductor film (9)

In the same manner as in Example 2, screen printing of the porous metal oxide semiconductor film-forming coating material (9) on the transparent glass substrate on which the titanium oxide thin film (1) had been formed and drying were repeated until the film thickness became 12 µm. Thereafter, the resulting film was subjected to calcining/annealing at 450 °C to form a porous metal oxide semiconductor film (9).

Film thickness of the resulting porous metal oxide semiconductor film (9), pore volume thereof as-determined by the nitrogen adsorption method, and mean pore diameter thereof are set forth in the table. Further, adhesion of the porous metal oxide semiconductor film (9) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (9) had been formed was used.

### Preparation of photovoltaic cell (9)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (9).

Voc, Joc, FF and η of the photovoltaic cell (9) were measured, and the results are set forth in Table 1.

### Example 10

### Preparation of porous metal oxide semiconductor film-forming coating material (10)

A solution obtained by dissolving 8 g of ethyl cellulose in 100 g of the titanium oxide particle (T9) dispersion prepared above and adding 75 g of terpineol was concentrated by a rotary evaporator so that the TiO₂ concentration would become 19% by weight, whereby a porous metal oxide semiconductor film-forming coating material (10) was prepared.

### Formation of porous metal oxide semiconductor film (10)

In the same manner as in Example 2, screen printing of the porous metal oxide semiconductor film-forming coating material (10) on the transparent glass substrate on which the titanium oxide thin film (1) had been formed and drying were repeated until the film thickness became 12 µm. Thereafter, the resulting film was subjected to calcining/annealing at 450°C to form a porous metal oxide semiconductor film (10).

Film thickness of the resulting porous metal oxide semiconductor film (10), pore volume thereof as determined by the nitrogen adsorption method, and mean pore diameter thereof are set forth in the table. Further, adhesion of the porous metal oxide semiconductor film (10) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (10) had been formed was used.

### Preparation of photovoltaic cell (10)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (10).

Voc, Joc, FF and η of the photovoltaic cell (10) were measured, and the results are set forth in Table 1.

### Example 11

### Preparation of porous metal oxide semiconductor film-forming coating material (11)

A solution obtained by dissolving 8 g of ethyl cellulose in 100 g of the titanium oxide particle (T10) dispersion prepared above and adding 75 g of terpineol was concentrated by a rotary evaporator so that the TiO₂ concentration would become 19% by weight, wereby a porous metal oxide semiconductor film-forming coating material (11) was prepared.

### Formation of porous metal oxide semiconductor film (11)

In the same manner as in Example 2, screen printing of the porous metal oxide semiconductor film-forming coating material (11) on the transparent glass substrate on which the titanium oxide thin film (1) had been formed and drying were repeated until the film thickness became 12 µm. Thereafter, the resulting film was subjected to calcining/annealing at 450 °C to forma porous metal oxide semiconductor film (11).

Film thickness of the resulting porous metal oxide semiconductor film (11), pore volume thereof as determined by the nitrogen adsorption method, and mean pore diameter thereof are set forth in the table. Further, adhesion of the porous metal oxide semiconductor film (11) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (11) had been formed was used.

### Preparation of photovoltaic cell (11)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (11).

Voc, Joc, FF and η of the photovoltaic cell (11) were measured, and the results are set forth in Table 1.

### Comparative Example 1

### Preparation of porous metal oxide semiconductor film-forming coating material (R1)

A solution obtained by dissolving 8 g of ethyl cellulose in 100 g of a titanium oxide fine particle dispersion (available from Catalysts & Chemicals Industries Co., Ltd., HPW-18NR, mean particle diameter: 20 nm, TiO₂ concentration: 20% by weight) and adding 75 g of terpineol was concentrated by a rotary evaporator so that the TiO₂ concentration would become 19% by weight, whereby a porous metal oxide semiconductor film-forming coating material (R1) was prepared.

### Formation of porous metal oxide semiconductor film (R1)

In the same manner as in Example 2, screen printing of the porous metal oxide semiconductor film-forming coating material (R1) on the transparent glass substrate on which the titanium oxide thin film (1) had been formed and drying were repeated until the film thickness became 12 µm. Thereafter, the resulting film was subjected to calcining/annealing at 450 °C to forma porous metal oxide semiconductor film (R1).

Film thickness of the resulting porous metal oxide semiconductor film (R1), pore volume thereof as determined by the nitrogen adsorption method, and mean pore diameter thereof are set forth in the table. Further, adhesion of the porous metal oxide semiconductor film (R1) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (R1) had been formed was used.

### Preparation of photovoltaic cell (R1)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (R1).

Voc, Joc, FF and η of the photovoltaic cell (R1) were measured, and the results are set forth in Table 1.

### Comparative Example 2

### Preparation of porous metal oxide semiconductor film-forming coating material (R2)

A solution obtained by dissolving 8 g of ethyl cellulose in 100 g of a titanium oxide fine particle dispersion (available from Catalysts & Chemicals Industries Co., Ltd., HPW-400C, mean particle diameter: 400 nm, TiO₂ concentration: 20% by weight) and adding 75 g of terpineol was concentrated by a rotary evaporator so that the TiO₂ concentration would become 19% by weight, whereby a porous metal oxide semiconductor film-forming coating material (R2) was prepared.

### Formation of porous metal oxide semiconductor film (R2)

In the same manner as in Example 2, screen printing of the porous metal oxide semiconductor film-forming coating material (R2) on the transparent glass substrate on which the titanium oxide thin film (1) had been formed and drying were repeated until the film thickness became 12 µm. Thereafter, the resulting film was subjected to calcining/annealing at 450 °C to form a porous metal oxide semiconductor film (R2).

Film thickness of the resulting porous metal oxide semiconductor film (R2), pore volume thereof as determined by the nitrogen adsorption method, and mean pore diameter thereof are set forth in the table. Further, adhesion of the porous metal oxide semiconductor film (R2) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (R2) had been formed was used.

### Preparation of photovoltaic cell (R2)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (R2).

Voc, Joc, FF and η of the photovoltaic cell (R2) were measured, and the results are set forth in Table 1.

### Comparative Example 3

### Preparation of porous metal oxide semiconductor film-forming coating material (R3)

40 g of a porous metal oxide semiconductor film-forming coating material (R1) prepared in the same manner as in Comparative Example 1 and 60 g of a porous metal oxide semiconductor film-forming coating material (R2) prepared in the same manner as in Comparative Example 2 were mixed to prepare a porous metal oxide semiconductor film-forming coating material (R3) having a TiO₂ concentration of 19% by weight.

### Formation of porous metal oxide semiconductor film (R3)

In the same manner as in Example 2, screen printing of the porous metal oxide semiconductor film-forming coating material (R3) on the transparent glass substrate on which the titanium oxide thin film (1) had been formed and drying were repeated until the film thickness became 12 µm. Thereafter, the resulting film was subjected to calcining/annealing at 450 °C to forma porous metal oxide semiconductor film (R3).

Film thickness of the resulting porous metal oxide semiconductor film (R3), pore volume thereof as determined by the nitrogen adsorption method, and mean pore diameter thereof are set forth in the table. Further, adhesion of the porous metal oxide semiconductor film (R3) was evaluated, and the result is set forth in Table 1.

### Adsorption of photosensitizer

A dye was adsorbed in the same manner as in Example 2, except that the transparent glass substrate on which the titanium oxide thin film (1) and the porous metal oxide semiconductor film (R3) had been formed was used.

### Preparation of photovoltaic cell (R3)

In the same manner as in Example 1, the electrode prepared above was used as one electrode. As the other electrode, an electrode of fluorine-doped tin oxide on which platinum had been supported was used. The other electrode was formed on a transparent glass substrate. The electrodes on substrate arranged in such a manner that the electrodes faced each other, followed by sealing the sides with a resin. Then, the electrolyte solution was enclosed between the electrodes, and the electrodes were connected to each other with a lead wire to prepare a photovoltaic cell (R3).

Voc, Joc, FF and η of the photovoltaic cell (R3) were measured, and the results are set forth in Table 1.

Table 1

**Table 1**

| | Titanium oxide thin film | | | Porous metal oxide semiconductor film | | | | | | | | | | | | Photovoltaic cell | | | |
|---|---|---|---|---|---|---|---|---|---|---|---|---|---|---|---|---|---|---|---|
| | Film thickness (nm) | Pore volume | Mean pore diameter | Titanium oxide particles | | | | | | | Film thickness | Pore volume | Mean pore diameter | Adsorption quantity of sensitizing dye | Adhesion of semiconductor film | | | | |
| | | | | Titanium oxide base particles | | | Titanium oxide fine particles | | | Mean particle diameter | | | | | | Voc | Joc | FF | η |
| | | | | Mean particle diamete | Crystal form | Content | Mean particle diameter | Crystal form | Content | | | | | | | | | | |
| | nm | cc/g | nm | nm | | wt% | nm | | wt% | nm | µm | cc/g | nm | µg/cm² | | V | mA/cm² | | % |
| Ex.1 | - | - | - | 400 | anatase | 60 | 20 | anatase | 40 | 450 | 12 | 0.4 | 22 | 160 | BB | 0.78 | 15.3 | 0.72 | 8.59 |
| Ex.2 | 40 | 0.12 | 2 | 400 | anatase | 60 | 20 | anatase | 40 | 450 | 12 | 0.4 | 22 | 160 | AA | 0.78 | 15.8 | 0.72 | 8.87 |
| Ex.3 | 40 | 0.12 | 2 | 400 | anatase | 80 | 20 | anatase | 20 | 440 | 12 | 0.35 | 25 | 120 | BB | 0.78 | 15.4 | 0.70 | 8.41 |
| Ex.4 | 40 | 0.12 | 2 | 400 | anatase | 40 | 20 | anatase | 60 | 460 | 12 | 0.45 | 20 | 180 | AA | 0.76 | 15.0 | 0.72 | 8.21 |
| Ex.5 | 40 | 0.12 | 2 | 400 | anatase | 60 | 10 | anatase | 40 | 430 | 12 | 0.45 | 21 | 200 | AA | 0.72 | 15.5 | 0.71 | 7.92 |
| Ex.6 | 40 | 0.12 | 2 | 400 | anatase | 60 | 35 | anatase | 40 | 480 | 12 | 0.4 | 26 | 140 | AA | 0.77 | 14.8 | 0.72 | 8.21 |
| Ex.7 | 40 | 0.12 | 2 | 200 | anatase | 60 | 20 | anatase | 40 | 250 | 12 | 0.48 | 21 | 170 | AA | 0.75 | 15.4 | 0.70 | 8.09 |
| Ex.8 | 40 | 0.12 | 2 | 500 | anatase | 60 | 20 | anatase | 40 | 650 | 12 | 0.43 | 24 | 150 | AA | 0.74 | 15.2 | 0.70 | 7.87 |
| Ex.9 | 40 | 0.12 | 2 | 175 | anatase | 60 | 20 | anatase | 40 | 225 | 12 | 0.52 | 28 | 180 | AA | 0.74 | 15.6 | 0.72 | 8.31 |
| Ex.10 | 40 | 0.12 | 2 | 400 | anatase | 48 | 22 | anatase | 52 | 460 | 12 | 0.41 | 23 | 170 | AA | 0.76 | 15.4 | 0.72 | 8.43 |
| Ex.11 | 40 | 0.12 | 2 | 400 | anatase | 60 | 21 | anatase | 40 | 450 | 12 | 0.4 | 22 | 160 | AA | 0.73 | 15.3 | 0.71 | 7.93 |
| Co-Ex.1 | 40 | 0.12 | 2 | - | - | - | 20 | anatase | 100 | 20 | 12 | 0.46 | 18 | 210 | AA | 0.74 | 14.8 | 0.71 | 7.78 |
| Co-Ex.2 | 40 | 0.12 | 2 | 400 | anatase | 100 | - | - | - | 400 | 12 | 0.25 | 25 | 95 | CC | 0.65 | 7.8 | 0.58 | 2.94 |
| Co-Ex.3 | 40 | 0.12 | 2 | 400 | anatase | 60 | 20 | anatase | 40 | 250 | 12 | 0.33 | 22 | 140 | BB | 0.72 | 12.8 | 0.68 | 6.27 |

## Claims

1. Use of peroxotitanic acid in the manufacture of a photovoltaic cell comprising:
a first substrate (5) having a first electrode layer (1) on its surface and having a porous metal oxide semiconductor film (2) which has adsorbed a photosensitizer ,
a second substrate (6) having a second electrode layer (3) on its surface,
said first substrate (5) and said second substrate (6) being arranged in such a manner that the first electrode layer (1) and the second electrode layer (3) face each other, and
an electrolyte layer (4) which is provided between the porous metal oxide semiconductor film (2) and the second electrode layer (3),
wherein the porous metal oxide semiconductor film (2) comprises titanium oxide particles which comprise 60 wt% base particles made of anatase titanium oxide and 40 wt% anatase titanium oxide fine particle layers covering the surfaces of the base particles,
the titanium oxide fine particles have a mean particle diameter of 20 nm, the base particles are made of spherical titanium oxide, the base particles have a mean particle diameter of 400 nm, and the titanium oxide particles have a mean particle diameter of 450 nm,
and wherein a titanium oxide thin film (7) derived from peroxotitanic acid, having a film thickness of 40 nm, a pore volume of 0.12 ml/g and a mean pore diameter of 2 nm, is provided between the first electrode layer (1) and the porous metal oxide semiconductor film (2).

## Patentansprüche

1. Verwendung von Peroxotitansäure in der Herstellung einer Photovoltaikzelle, welche folgendes umfasst:
ein erstes Substrat (5) mit einer ersten Elektrodenschicht (1) auf seiner Oberfläche und mit einer porösen Metalloxyd-Halbleiterfolie (2), die einen Photosensibilisator absorbiert hat; ein zweites Substrat (6) mit einer zweiten Elektrodenschicht (3) auf seiner Oberfläche,
wo besagtes erstes Substrat (5) und besagtes zweites Substrat (6) derart angeordnet sind, dass die erste Elektrodenschicht (1) und die zweite Elektrodenschicht (3) einander gegenüber stehen, und
eine, zwischen der porösen Metalloxyd-Halbleiterfolie (2) und der zweiten Elektrodenschicht (3) angeordnete Elektrolytschicht (4),
**dadurch gekennzeichnet, dass** die poröse Metalloxyd-Halbleiterfolie (2) Titanoxydpartikel umfasst, die 60 % Gewicht Basispartikel aus Anatas-Titanoxyd und 40 % Gewicht Anatas-Titanoxyd-Feinpartikel-Schichten umfasst, welche die Oberfläche besagter Basispartikel bedecken,
wobei die Titanoxyd-Feinpartikel einen durchschnittlichen Partikeldurchmesser von 20 nm, die Basispartikel, die aus sphärischem Titanoxyde bestehen, einen durchschnittlichen Partikeldurchmesser von 400 nm, und die Titanoxydpartikel einen durchschnittlichen Partikeldurchmesser von 450 nm haben
und wobei eine dünne Titanoxydfolie (7), die aus der Peroxotitansäure abgeleitet ist, mit einer Folienstärke von 40 nm, einem Porenvolumen von 0,12 ml/g und einem durchschnittlichen Porendurchmesser von 2 nm zwischen der ersten Elektrodenschicht (1) und der porösen Metalloxyd-Halbleiterfolie (2) bereitgestellt wird.

## Revendications

1. Utilisation d'acide péroxotitanique dans la fabrication d'une cellule photovoltaïque comprenant :
un premier substrat (5) ayant une première couche d'électrode (1) sur sa surface et ayant un film de semi-conducteur poreux d'oxyde de métal (2) qui a adsorbé un agent photosensibilisant,
un second substrat (6) ayant une seconde couche d'électrode (3) sur sa surface,
ledit premier substrat (5) et ledit second substrat (6) étant agencés de telle sorte que la première couche d'électrode (1) et la seconde couche d'électrode (3) se font face, et
une couche d'électrolyte (4) qui est disposée entre le film de semi-conducteur poreux d'oxyde de métal (2) et la seconde couche d'électrode (3),
dans lequel le film de semi-conducteur poreux d'oxyde de métal (2) comprend des particules d'oxyde de titane qui comprennent 60 % en poids de particules de base faites d'oxyde de titane anatase et 40 % en poids de couches de particules fines d'oxyde de titane anatase couvrant les surfaces des particules de base,
les particules fines d'oxyde de titane ont un diamètre de particule moyen de 20 nm, les particules de base sont faites d'oxyde de titane sphérique, les particules de base ont un diamètre de particule moyen de 400 nm et les particules d'oxyde de titane ont un diamètre de particule moyen de 450 nm,
et dans lequel un film mince d'oxyde de titane (7) obtenu à partir d'acide péroxotitanique, ayant une épaisseur de film de 40 nm, un volume de pore de 0,12 ml/g et un diamètre de pore moyen de 2 nm, est prévu entre la première couche d'électrode (1) et le film de semi-conducteur poreux d'oxyde de métal (2).
